# EUROPÄISCHE PATENTSCHRIFT

(11) **EP 2 594 824 B1**
(45) Veröffentlichungstag und Bekanntmachung des Hinweises auf die Patenterteilung: **07.01.2015**
(21) Anmeldenummer: 12007544.5
(22) Anmeldetag: 06.11.2012
(51) Int. Cl.: F16H 55/30

(54) **Selbsteinstellendes Antriebsrad**
Self-adjusting drive wheel
Roue motrice à réglage automatique

(30) Priorität: 15.11.2011 DE 102011118515
(43) Veröffentlichungstag der Anmeldung: 22.05.2013
(73) Patentinhaber: Herkenrath, Karl, 56746 Kempenich (DE)
(72) Erfinder: Herkenrath, Karl, 56746 Kempenich (DE)
(74) Vertreter: Hauck Patent- und Rechtsanwälte

(56) Entgegenhaltungen:
- DE-C2- 4 317 461
- JP-A- 2008 304 064
- US-A- 4 881 930

## Beschreibung

Die vorliegende Erfindung betrifft ein selbsteinstellendes Antriebsrad.

Herkömmliche Kettenräder bestehen in der Regel aus Scheiben oder Ringen, in deren äußerem Umfangsbereich daran angeformte Zähne vorgesehen sind. Insbesondere bei Laschenketten sind jedoch Fertigungstoleranzen zwischen den einzelnen miteinander verbundenen Kettengliedern vorhanden, die bei der Umlenkung um das Kettenrad infolge unterschiedlicher Teilung zu einem erhöhten Verschleiß sowohl an den Kettengliedern als auch an den Zähnen des Kettenrades führen. Ferner nachteilig ist, dass infolge dieser Toleranzen sowie dem sich kurzfristig einstellenden Verschleiß nicht alle Zähne des Kettenrades gleichmäßig in Kraftrichtung belastet werden.

Zur Abhilfe dieses Problems hat man bereits ein selbsteinstellendes Kettenrad vorgeschlagen, das in der DE 43 17 461 C2 beschrieben ist und die eingangs erläuterten Merkmale aufweist. Bei diesem bekannten Kettenrad sind die Zahnsegmente mit in Umfangsrichtung verlaufenden, Überlappungsbereiche bildenden Ansätzen versehen, und in jedem Überlappungsbereich ist zwischen den Ansätzen der benachbarten Zahnsegmente mindestens ein Federelement angeordnet. Jedes einzelne Zahnsegment ist somit bei vertikaler Anordnung des Grundkörpers um eine Horizontalachse gegenüber dem Grundkörper dreh- bzw. kippbar gelagert, wobei die Zahnsegmente in ihrer Form so ausgestaltet sind, dass jedes Zahnsegment die durch die Glieder der Kette auf es ausgeübte Dreh- bzw. Kippbewegung auf das in Umfangsrichtung nachfolgende Zahnsegment überträgt. Infolge der Dreh- bzw. Kippbewegung der einzelnen Zahnsegmente können durch Fertigung bedingte Toleranzen und Dehnungen der Ketten im Betriebszustand unmittelbar am Kettenrad ausgeglichen werden, da nun sämtliche Zahnsegmente in gleicher Weise beaufschlagt werden.

Aus der JP 2008 304064 A ist ein Antriebsrad bekannt, an dessen Umfang mehrere benachbart zueinander angeordnete Zahnsegmente vorgesehen sind. Diese Zahnsegmente stoßen mit radialen Begrenzungsflächen gegeneinander. In gegenüberliegenden Ausnehmungen benachbarter Zahnsegmente ist jeweils ein elastisches nachgiebiges Federelement angeordnet, dass als Gummielement ausgebildet ist. Zwischen benachbarten Zähnen eines Zahnsegmentes ist jeweils ein sich bis in eine Ausnehmung erstreckender Spalt angeordnet, der im Betrieb des Antriebsrades eine Verbiegung der jeweiligen Zähne ermöglicht.

Der vorliegenden Erfindung liegt die Aufgabe zugrunde, ein selbsteinstellendes Antriebsrad zu schaffen, das sich durch einen besonders geringen Verschleiß auszeichnet.

Diese Aufgabe wird erfindungsgemäß bei einem selbsteinstellenden Antriebsrad der angegebenen Art mit den Merkmalen des Anspruchs 1 gelöst.

Durch die erfindungsgemäße Ausgestaltung bzw. Anordnung wird eine besonders gute und gleichmäßige Kräfteverteilung erreicht. Mithilfe der speziell angeordneten und ausgebildeten Federelemente können sowohl Druck- als auch Zugkräfte übertragen werden. Die beweglichen Segmente sind insbesondere in beiden Richtungen belastbar und übertragen die jeweiligen Kräfte auf das nachfolgende und zurückliegende Segment. Die erfindungsgemäß verwendeten Spannhülsen sind hierbei besonders geeignet, da sie im vorgespannten Zustand in den Ausnehmungen angeordnet sind und somit auch die Übertragung von Zugkräften ermöglichen.

Die seitlichen Begrenzungsflächen der Zahnsegmente sind durchgehend radial gerichtet, d.h. die entsprechenden Zahnsegmente weisen keine Ansätze wie beim vorstehend genannten Stand der Technik auf. Hierdurch lassen sich bei entsprechender Belastung die Zahnsegmente um ihre Befestigungspunkte am Grundkörper entsprechend drehen bzw. kippen, wobei abwechselnde Bewegungen der benachbarten Segmente resultieren, d.h. das erste Segment kippt nach rechts, das zweite Segment kippt nach links etc. Insgesamt wird die durch die Kette aufgebrachte Kraft hierdurch auf besonders viele Zahnsegmente verteilt, so dass eine entsprechende Verschleißreduzierung erreicht wird.

Die vorliegende Erfindung betrifft beliebig ausgebildete Antriebsräder, die mit flexiblen Antriebsorganen zusammenwirken, welche mit den hier beschriebenen Zahnsegmenten in Eingriff treten können. Solche Antriebsräder sind primär Kettenräder, die mit Ketten zusammenwirken.

Ein weiterer Vorteil des erfindungsgemäßen Antriebsrades besteht darin, dass dieses eine besonders geringe Geräuschentwicklung hervorruft.

In Weiterbildung der Erfindung ist zwischen benachbarten Zahnsegmenten ein radialer Spalt mit einer Breite von 2-6 mm, insbesondere 4 mm, vorhanden. Dieser Spalt wird durch die Spannhülsen zwischen benachbarten Zahnsegmenten überbrückt.

Vorzugsweise ist zwischen benachbarten Zahnsegmenten radial außerhalb des Federelementes eine Dichtung vorgesehen. Diese Dichtung verhindert das Eindringen von Schmutz- bzw. Staubpartikeln in den radialen Spalt zwischen benachbarten Zahnsegmenten. Die Dichtung ist vorzugsweise in zwei gegenüberliegenden Ausnehmungen der radial verlaufenden Begrenzungsflächen von benachbarten Zahnsegmenten angeordnet und überbrückt somit einen entsprechenden Radialspalt. Beispielsweise kann als geeignete Dichtung ein entsprechender Gummischlauch verwendet werden.

Die Ausnehmungen, in denen die Spannhülsen angeordnet sind, und/oder die Ausnehmungen, in denen die Dichtungen angeordnet sind, sind zweckmäßigerweise als Halbbohrungen mit halbkreisförmigem Querschnitt ausgebildet.

Die einzelnen Zahnsegmente sind in Umfangsrichtung im Abstand voneinander am Grundkörper befestigt. Vorzugsweise ist die Befestigung am Zahnsegment in Umfangsrichtung mittig angeordnet, so dass entsprechende Kippbewegungen in beiden Richtungen erfolgen können. In Weiterbildung der Erfindung sind die Befestigungspunkte der Zahnsegmente am Grundkörper auf dem gleichen Teilkreisdurchmesser wie die Federelemente angeordnet. Bei anderen Ausführungsformen sind die Mittelpunkte der Federelemente radial versetzt zu den Befestigungspunkten angeordnet. Hierdurch lassen sich die entsprechenden Hebelverhältnisse beeinflussen und für den jeweiligen Anwendungsfall optimieren.

Als Federelemente finden erfindungsgemäß Spannhülsen Verwendung. Solche Spannhülsen sind vorzugsweise als geschlitzter zylindrischer Körper mit geradlinigem oder zickzackförmigem Schlitz ausgebildet. Die Spannhülsen besitzen im unbelasteten Zustand einen größeren Durchmesser als die Ausnehmungen in den seitlichen Begrenzungsflächen und werden unter Vorspannung, d.h. im zusammengedrückten Zustand, in die Ausnehmungen eingesetzt, so dass sie benachbarte Zahnsegmente miteinander verspannen.

Der Grundkörper des selbsteinstellenden Kettenrades weist vorzugsweise in seiner Stirnfläche einen Umfangsschlitz auf, in dem die einzelnen Zahnsegmente teilweise angeordnet sind und aus dem sie teilweise in Radialrichtung vorstehen. Die Befestigung der Zahnsegmente erfolgt dabei über Befestigungselemente, die sich durch Bohrungen in den Umfangsflanschen den Grundkörpers und in den jeweiligen Zahnsegmenten erstrecken. Bei diesen Befestigungselementen kann es sich beispielsweise um Bolzen handeln, um die die Zahnsegmente drehbar bzw. kippbar gelagert sind. Die Lagerung der Zahnsegmente muss nicht unbedingt an zwei Umfangsflanschen des Grundkörpers erfolgen, sondern kann auch an einem Umfangsflansch durchgeführt werden, wobei der Grundkörper nur diesen einen Umfangsflansch besitzt. Hier kann das Zahnsegment beispielsweise zwei Außenflansche besitzen, die mit einem Umfangsflansch des Grundkörpers zusammenwirken. Die Erfindung wird nachfolgend anhand eines Ausführungsbeispieles in Verbindung mit der Zeichnung im Einzelnen erläutert. Es zeigen:
- Figur 1: eine Draufsicht auf einen Teil eines selbsteinstellenden Kettenrades einer ersten Ausführungsform;
- Figur 2: eine Draufsicht auf ein selbsteinstellendes Kettenrad einer zweiten Ausführungsform mit angedeuteter Kette;
- Figur 3: eine vergrößerte Schnittansicht der Befestigung des Zahnsegmentes am Grundkörper; und
- Figur 4: eine vergrößerte räumliche Darstellung eines Federelementes in Form einer Spannhülse.

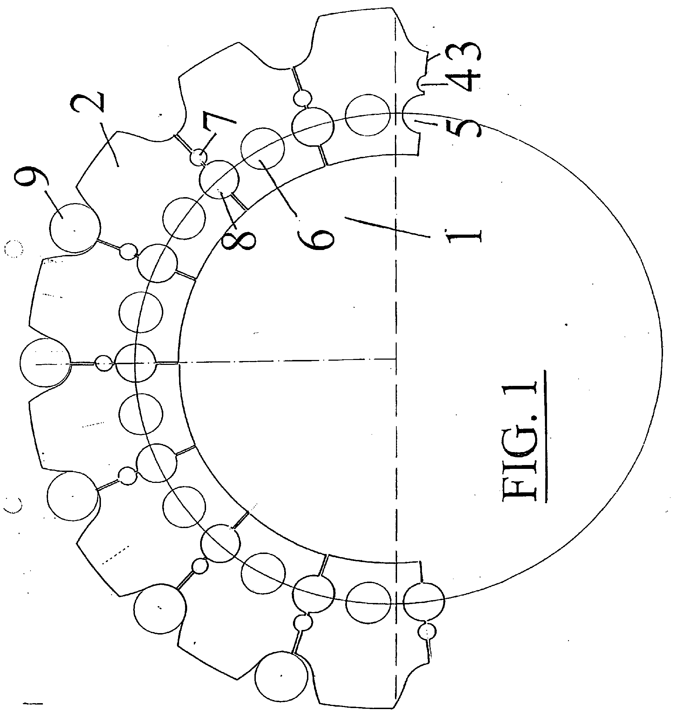

Das in Figur 1 teilweise dargestellte selbsteinstellende Kettenrad besitzt einen scheibenförmigen Grundkörper 1, um dessen Umfang herum eine Vielzahl von Zahnsegmenten 2 angeordnet ist. Die Zahnsegmente sind über Befestigungselemente 6, die hier nur schematisch dargestellt sind, in Umfangsrichtung drehbar oder kippbar am Grundkörper 1 gelagert, und zwar zwischen zwei Umfangsflanschen des Grundkörpers 1 in einem entsprechenden Umfangsschlitz. Die Zahnsegmente 2 weisen in Radialrichtung durchlaufende seitliche Begrenzungsflächen 3 auf, wobei die beiden Begrenzungsflächen 3 von benachbarten Zahnsegmenten 2 zwischen sich einen Radialspalt von 4 mm bilden. Die Innenseite des Zahnsegmentes 2 ist an die Krümmung des Grundkörpers 1 angepasst und ebenfalls entsprechend gekrümmt ausgebildet, wobei zwischen Grundkörper und Zahnsegment ebenfalls ein Spalt von 4 mm vorhanden ist. Das Zahnsegment 2 kann somit eine entsprechende Kipp- oder Drehbewegung um die Achse des Befestigungselementes 6 durchführen, das sich durch eine entsprechende Bohrung in den beiden Umfangsflanschen des Grundkörpers 1 und des scheibenförmigen Zahnsegmentes 2 erstreckt. Es kann sich hierbei beispielsweise um einen runden Bolzen handeln.

Die seitlichen Begrenzungsflächen 3 der jeweiligen Zahnsegmente 2 sind mit halbzylindrischen Bohrungen 5 versehen, wobei zwei Halbbohrungen 5 von benachbarten Zahnsegmenten 2 eine Bohrung zur Aufnahme eines Federelementes in Form einer Spannhülse 8 bilden. Die entsprechende Spannhülse 8 ist in Figur 1 nur schematisch dargestellt. Sie ist unter Vorspannung in die von den beiden Halbbohrungen 5 gebildete Ausnehmung eingesetzt und verspannt die entsprechenden Zahnsegmente 2 miteinander.

Radial außerhalb der Halbbohrung 5 befindet sich eine kleinere halbzylindrische Bohrung 4, die mit der halbzylindrischen Bohrung eines benachbarten Zahnsegmentes eine Ausnehmung zur Aufnahme einer Dichtung in Form eines Gummischlauches bildet. Die Dichtung 7, die nur schematisch in Figur 1 dargestellt ist, verhindert den Eintritt von Staub- bzw. Schmutzpartikeln in den entsprechenden Radialspalt zwischen zwei benachbarten Zahnsegmenten 2.

In Figur 1 sind ferner Teile 9 einer Kette dargestellt. Wenn die Kette mit dem Kettenrad in Kontakt tritt, werden die Zahnsegmente 2 um ihre Befestigungselemente 6 gedreht bzw. verkippt, wobei die Dreh- bzw. Kipprichtungen von benachbarten Zahnsegmenten entgegengesetzt zueinander sind. Auf jeden Fall werden die von der Kette auf das Kettenrad und damit die Zahnsegmente ausgeübten Kräfte über die Spannhülsen 8 auf die anderen Zahnsegmente übertragen, so dass sich eine weitgehend gleichmäßige Beanspruchung sämtlicher Zahnsegmente ergibt, wodurch der Verschleiß der Kette und des Kettenrades herabgesetzt wird.

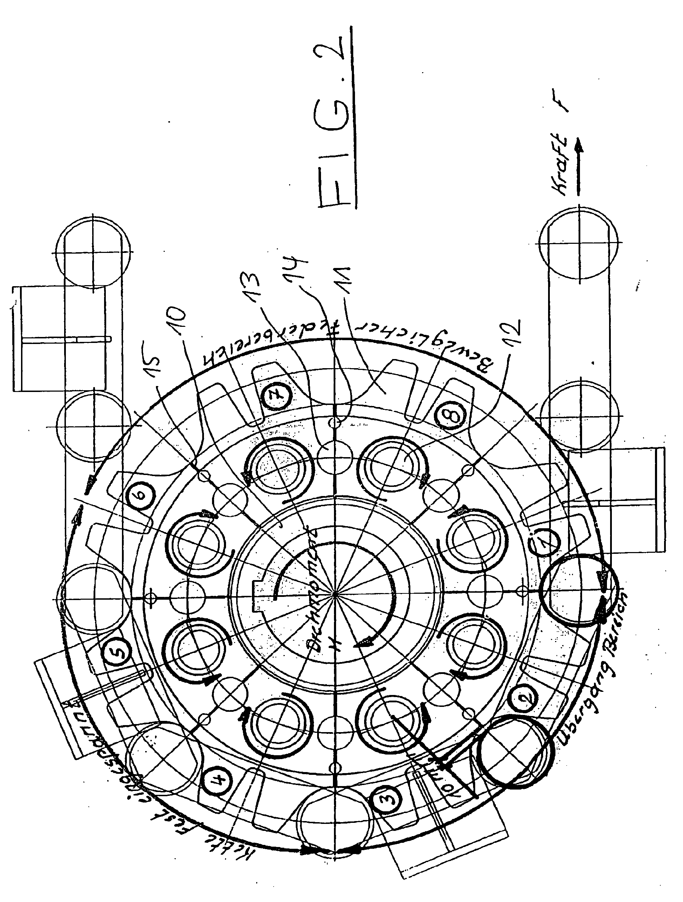

Figur 2 zeigt eine Ansicht einer weiteren Ausführungsform eines selbsteinstellenden Kettenrades. Das Kettenrad der Figur 2 besitzt einen scheibenförmigen Grundkörper 10, an dessen Umfang eine Vielzahl von Zahnsegmenten 11 über entsprechende Befestigungselemente 12 drehbar bzw. kippbar gelagert ist. Bei der hier dargestellten Ausführungsform sind insgesamt acht Zahnsegmente vorgesehen. Jedes Zahnsegment 11 besitzt zwei Zähne. Benachbarte Zahnsegmente sind durch einen Radialspalt 15 voneinander getrennt, den in Radialrichtung durchlaufende Begrenzungsflächen bilden.

Eine schematisch in Figur 2 dargestellte Kette übt eine entsprechende Kraft F auf das Kettenrad aus, wodurch die entsprechenden Zahnsegmente 11 um die jeweiligen Befestigungselemente 12 in unterschiedliche Richtungen verkippt bzw. verdreht werden. Auch bei dieser Ausführungsform befinden sich zwischen benachbarten Zahnsegmenten 11 entsprechende Federelemente, die als Spannhülsen 13 ausgebildet sind, und Dichtungen 14. Die Spannhülsen 13 übertragen die entsprechenden Kräfte zwischen den Zahnsegmenten 11.

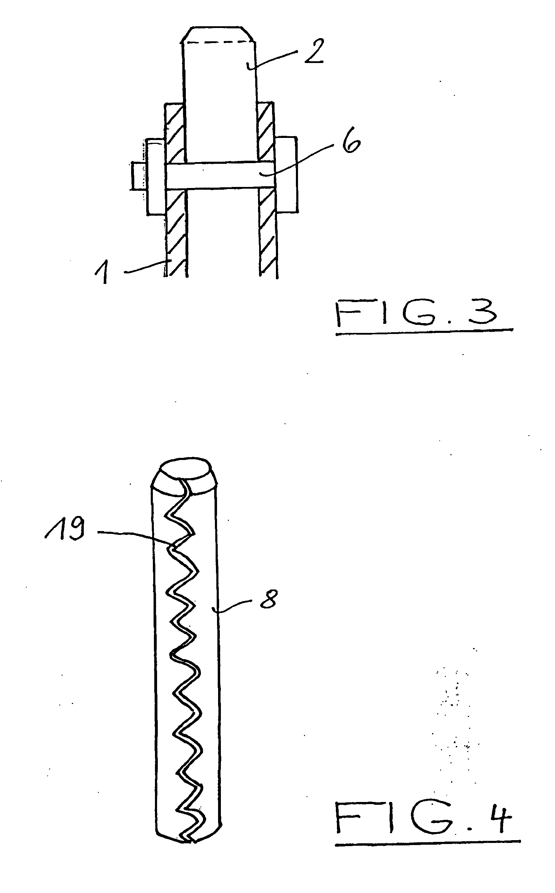

Figur 3 zeigt in vergrößertem Maßstab die Befestigung eines Zahnsegmentes 2 am Grundkörper 1. Das Zahnsegment 2 befindet sich zwischen den beiden Umfangsflanschen des Grundkörpers und ist an diesen mithilfe eines Schraubbolzens 6 drehbar gelagert.

Figur 4 zeigt eine räumliche Darstellung einer Spannhülse 8, die als geschlitzter zylindrischer Körper ausgebildet ist. Der Schlitz 19 ist hierbei zickzackförmig ausgebildet. Die Spannhülse 8 besitzt einen größeren Außendurchmesser als die zugehörige Ausnehmung 5, so dass sie im eingesetzten Zustand entsprechende Radialkräfte auf die beiden benachbarten Zahnsegmente ausübt. Auf diese Weise werden die von der Kette eingeleiteten Kräfte gleichmäßig auf die entsprechenden Zahnsegmente übertragen.

## Patentansprüche

1. Selbsteinstellendes Antriebsrad, insbesondere Kettenrad, mit einem Grundkörper (1,10), an dessen Umfang mehrere, mit demselben verbundene, jeweils um eine im Wesentlichen parallel zur Mittelachse des Grundkörpers (1,10) verlaufende Achse in Umfangsrichtung dreh- bzw. kippbare Zahnsegmente (2,11) vorgesehen sind, wobei zwischen benachbarten beabstandeten Zahnsegmenten (2,11) mindestens ein elastisch nachgiebiges Federelement angeordnet ist, das in gegenüberliegenden Ausnehmungen (5) benachbarter Zahnsegmente (2,11) gelagert ist, die seitlichen Begrenzungsflächen (3) der Zahnsegmente (2, 11) durchgehend radial verlaufen, die gegenüberliegenden Ausnehmungen (5) in den radial verlaufenden Begrenzungsflächen (3) benachbarter Zahnsegmente (2, 11) angeordnet sind und die elastisch nachgiebigen Federelemente als Spannhülsen (8, 13) ausgebildet sind.

2. Antriebsrad nach Anspruch 1, **dadurch gekennzeichnet, dass** zwischen benachbarten Zahnsegmenten (2, 11) ein radialer Spalt (15) mit einer Breite von 2-6 mm, insbesondere 4 mm, vorhanden ist.

3. Antriebsrad nach Anspruch 1 oder 2, **dadurch gekennzeichnet, dass** zwischen benachbarten Zahnsegmenten (2, 11) radial außerhalb des Federelementes eine Dichtung (7, 14) vorgesehen ist.

4. Antriebsrad nach Anspruch 3, **dadurch gekennzeichnet, dass** die Dichtung (7, 14) in zwei gegenüberliegenden Ausnehmungen (4) der radial verlaufenden Begrenzungsflächen (3) von benachbarten Zahnsegmenten (2, 11) angeordnet ist.

5. Antriebsrad nach einem der vorangehenden Ansprüche, **dadurch gekennzeichnet, dass** die Zahnsegmente (2, 11) in Umfangsrichtung im Abstand voneinander am Grundkörper (1, 10) befestigt sind.

6. Antriebsrad nach einem der vorangehenden Ansprüche, **dadurch gekennzeichnet, dass** die Befestigungspunkte der Zahnsegmente (2, 11) am Grundkörper (1, 10) auf dem gleichen Teilkreisdurchmesser wie die Federelemente liegen.

7. Antriebsrad nach einem der vorangehenden Ansprüche, **dadurch gekennzeichnet, dass** die Spannhülsen (8, 13) als geschlitzter zylindrischer Körper mit geradlinigem oder zickzackförmigem Schlitz (19) ausgebildet sind.

## Claims

1. A self-adjusting drive wheel, especially chain wheel, comprising a basic body (1, 10) at the circumference of which several tooth segments (2, 11) are provided which are connected with the basic body and which are each circumferentially rotatable or pivotable about an axis substantially extending parallel with respect to the central axis of the basic body (1, 10), wherein at least one elastically resilient spring member is located between adjacent spaced tooth segments (2, 11) and which is supported in opposite recesses (5) of adjacent tooth segments (2, 11), the lateral limiting surfaces (3) of the tooth segments (2, 11) extend continuously radially, the opposite recesses (5) are located in the radially extending limiting surfaces (3) of adjacent tooth segments (2, 11) and the elastically resilient spring members are formed as tensioning sleeves (8, 13).

2. The drive wheel according to claim 1, **characterized in that** a radial gap (15) with a width of 2-6 mm, especially of 4 mm, is present between adjacent tooth segments (2, 11).

3. The drive wheel according to claim 1 or 2, **characterized in that** a seal (7, 14) is provided between adjacent tooth segments (2, 11) radially outside of the spring member.

4. The drive wheel according to claim 3, **characterized in that** the seal (7, 14) is located in two opposite recesses (4) of the radially extending limiting surfaces (3) of adjacent tooth segments (2, 11).

5. The drive wheel according to one of the preceding claims, **characterized in that** the tooth segments (2, 11) are fixed at the basic body (1, 10) circumferentially spaced from one another.

6. The drive wheel according to one of the preceding claims, **characterized in that** the fixing points of the tooth segments (2, 11) at the basic body (1, 10) are located on the same pitch diameter as the spring members.

7. The drive wheel according to one of the preceding claims, **characterized in that** the tensioning sleeves (8, 13) are formed as slotted cylindrical body with linear or zigzag slot (19).

## Revendications

1. Roue motrice à réglage automatique, en particulier roue à chaîne, comprenant un corps de base (1, 10) sur le pourtour duquel sont prévus plusieurs segments dentés (2, 1-1) reliés à celui-ci, pouvant être respectivement mis en rotation ou inclinés dans la direction périphérique par rapport à un axe s'étendant pratiquement parallèlement à l'axe central du corps de base (1, 10), au moins un élément ressort élastiquement déformable qui est monté dans des évidements (5) opposés de segments dentés (2,11) voisins étant disposé entre des segments dentés (2, 11) voisins espacés, les surfaces de délimitation (3) latérales des segments dentés (2,11) s'étendant radialement en continu, les évidements (5) opposés étant disposés dans les surfaces de délimitation (3) latérales s'étendant radialement de segments dentés (2, 11) voisins et les éléments ressorts élastiquement déformables étant conçus comme des douilles de serrage (8, 13).

2. Roue motrice selon la revendication 1, **caractérisée en ce qu'**une fente (15) radiale ayant une largeur de 2 - 6 mm, en particulier de 4 mm, est située entre segments dentés (2, 11) voisins.

3. Roue motrice selon la revendication 1 ou 2, **caractérisée en ce qu'**un joint d'étanchéité (7, 14) est prévu radialement à l'extérieur de l'élément ressort entre segments dentés (2, 11) voisins.

4. Roue motrice selon la revendication 3, **caractérisée en ce que** le joint d'étanchéité (7, 14) est disposé dans deux évidements (4) opposés des surfaces de délimitation (3) s'étendant radialement de segments dentés (2, 11) voisins.

5. Roue motrice selon l'une quelconque des revendications précédentes, **caractérisée en ce que** les segments dentés (2, 11) sont fixés sur le corps de base (1, 10) a distance ies uns des autres dans la direction périphérique..

6. Roue motrice selon l'une quelconque des revendications précédentes, **caractérisée en ce que** les points de fixation des segments dentés (2, 11) se trouvent sur le corps de base (1, 10) sur le même diamètre de cercle partiel que les éléments ressorts.

7. Roue motrice selon l'une quelconque des revendications précédentes, **caractérisée en ce que** les douilles de serrage (8, 13) sont conçues comme des corps cylindriques fendus à fente (19) rectiligne ou en forme de zigzag.
